# EUROPÄISCHE PATENTANMELDUNG

(11) **EP 0 531 968 A1**
(43) Veröffentlichungstag der Anmeldung: **17.03.1993**
(21) Anmeldenummer: 92115418.3
(22) Anmeldetag: 09.09.1992
(51) Int. Cl.: C09B 67/22, C09B 62/503

(54) **Mischung wasserlöslicher faserreaktiver Farbstoffe und ihre Verwendung**

(30) Priorität: 13.09.1991 DE 4130498
(71) Anmelder: HOECHST AKTIENGESELLSCHAFT, D-65926 Frankfurt am Main (DE)
(72) Erfinder: Hähnke, Manfred, Dr., W-6233 Kelkheim (Ts) (DE); Segal, Marcos, Dr., Hoechst do Brasil, Sao Paulo (BR); Russ, Werner Hubert, Dr., W-6093 Flörsheim/M. (DE); Mrotzeck, Uwe, Dr., W-6233 Kelkheim (Ts) (DE); Reiter, Jutta, W-6000 Frankfurt/Main 1 (DE); Feuchtner, Christine, W-6791 Glan-Münchweiler (DE)

(57) **Zusammenfassung**

Die Erfindung betrifft Farbstoffzusammensetzungen zur Erzielung von egalen Färbungen auf carbonamidgruppenhaltigen und hydroxygruppenhaltigen Fasermaterialien mit vergleichsweise guten Licht- und Naßlichtechtheiten, gekennzeichnet durch den Gehalt an Dioxazinfarbstoffen (I) und Disazofarbstoffen (II) (ein oder mehrere aus IIa bis IIf) im Gew.-Verhältnis von 90:10 bis 10:90, vorzugsweise von 60:40 bis 10:90, insbesondere von 40:60 bis 15:85.

## Beschreibung

Die Erfindung liegt auf dem technischen Gebiet der faserreaktiven Farbstoffe.

Aus der US-A 4 629 788, der US-A 4 774 333und der USA 4 705 524 sind wasserlösliche Dioxazin-Farbstoffe bekannt, die eine β-Sulfatoethylsulfonyl- oder eine Vinylsulfonyl-Reaktivgruppe besitzen. Diese Farbstoffe zeichnen sich - insbesondere unter den zur Fixierung von faserreaktiven Farbstoffen erforderlichen alkalischen Bedingungen- durch eine hohe Affinität und Reaktivität gegenüber der Cellulosefaser aus, weswegen beim Färben nach einem Ausziehverfahren das Aufziehen der Farbstoffe auf die Faser und insbesondere deren Fixierung auf der Faser derart rasch erfolgen, daß die resultierenden Färbungen oft als unegal empfunden werden.

Ein weiterer Nachteil der Farbstoffe aus den obengenannten Patentveröffentlichungen liegt darin, daß das Färbeergebnis bei Färbungen nach dem Ausziehverfahren relativ stark von der Färbedauer abhängt. So durchläuft die Farbausbeute auf der Faser ein Optimum und nimmt bei längerer Färbedauer wieder ab. Verlängerte Färbezeiten spielen in der Praxis insbesondere dann eine entscheidende Rolle, wenn nach der vorgeschriebenen Färbezeit der Farbton noch nicht exakt der Vorlage entspricht und eine Nachnuancierung mit einem oder mehreren geeigneten Farbstoffen durchgeführt werden muß. Hier erhöhen bereits applizierte Farbstoffe, deren Farbstärke und Farbtonnuance sich bei Verlängerung der Färbezeit nicht signifikant verändern, die Prozeßsicherheit bei der Nuancierung erheblich.

Weiterhin sind beispielsweise aus dem Beispiel 11 der GB-A1-2 029 850, dem Beispiel 1 der US-A 4 314 818, dem Beispiel 1 der US-A-4 412 948, dem Beispiel 1 der US-A 4 946 947, sowie aus dem Colour Index als C.I. Reactive Black 5 faserreaktive marineblaue Disazofarbstoffe bekannt, deren Färbungen auf Cellulosefasermaterialien lediglich mäßige bis schlechte Licht- und Naßlichtechtheiten besitzen.

Der vorliegenden Erfindung liegt die Aufgabe zugrunde, Reaktivfarbstoffe des Farbtons Marineblau mit verbesserten anwendungstechnischen Eigenschaften hinsichtlich der Licht- und Naßlichtechtheit für das Färben oder Bedrucken von carbonamid- oder hydroxygruppenhaltigen Fasermaterialien zur Verfügung zu stellen.

Es wurde nun gefunden, daß die besagten Nachteile dieser Farbstoffe überraschenderweise durch ein Gemisch von faserreaktiven Farbstoffen aus mindestens einem Farbstoff der allgemeinen Formel (I) und mindestens einem Farbstoff der nachstehenden allgemeinen Formeln (IIa bis IIf) behoben werden. Es wurde weiterhin gefunden, daß solche Farbstoffgemische bzw. die gleichzeitige Verwendung von Farbstoffen der Formeln (I) und (IIa bis IIf) beim Färben nach einem Ausziehverfahren auf carbonamidhaltigen und insbesondere auf cellulosischen Fasermaterialien in überraschender Weise ein Färbeergebnis liefern, das sich auch bei erheblicher Verlängerung der Färbezeit nicht signifikant ändert. Es wurde ferner gefunden, daß solche Farbstoffgemische bzw. die gleichzeitige Verwendung von Farbstoffen der Formeln (I) und (II) in überraschender Weise sehr egale Färbungen mit relativ guten Licht- und Naßlichtechtheiten liefern. Es wurde insbesondere gefunden, daß faserreaktive Dioxazinfarbstoffe mit der nachstehenden Konstitution der allgemeinen Formel (I) nicht mehr die färberischen Nachteile zeigen, wenn sie in Mischung mit mindestens einem marineblauen Farbstoff der nachfolgenden allgemeinen Formeln (IIa), (IIb), (IIc), (IId), (IIe) und (IIf) oder Mischungen dieser Farbstoffe (II) eingesetzt werden.

Die vorliegende Erfindung betrifft eine Zusammensetzung von wasserlöslichen faserreaktiven Farbstoffen, die mindestens einen Dioxazinfarbstoff entsprechend der allgemeinen Formel (I) und mindestens einen Disazofarbstoff entsprechend den allgemeinen Formeln (IIa), (IIb), (IIc), (IId), (IIe) und (IIf) im Verhältnis von 90:10 bis 10:90 Gewichtsteilen der Farbstoffe (I) und (II) enthält oder im wesentlichen daraus besteht, 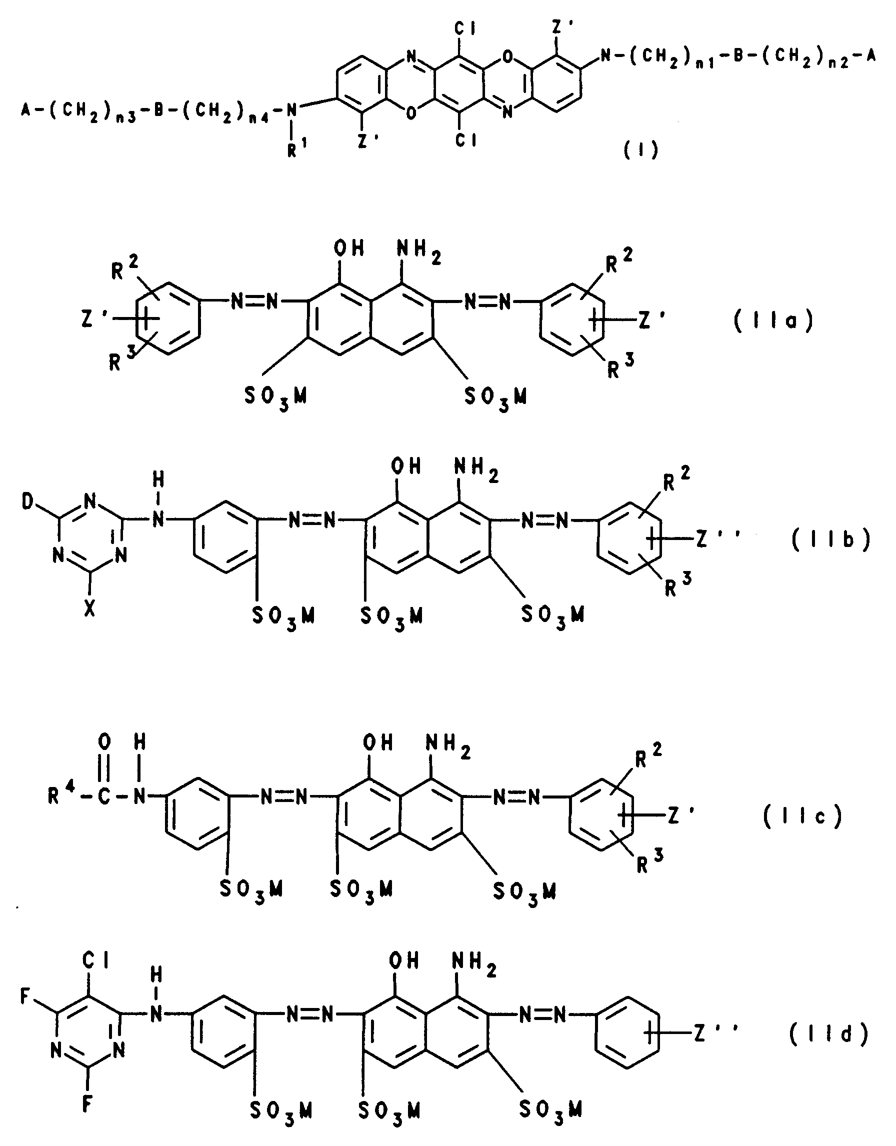 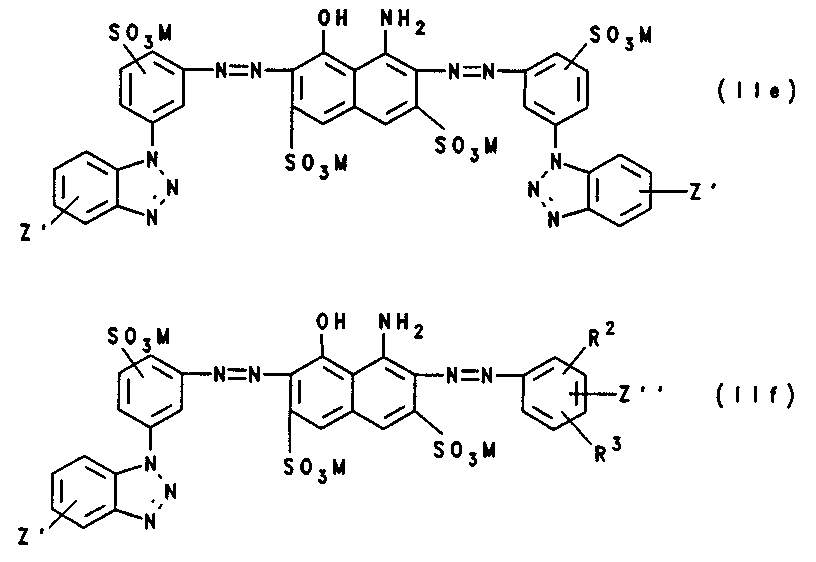
worin die einzelnen Symbole zueinander gleiche oder voneinander verschiedene Bedeutungen besitzen und
- Z': eine Vinylsulfonyl-Gruppe, eine β-Sulfatoethylsulfonyl-Gruppe oder eine Ethylsulfonyl-Gruppe ist, die in β-Stellung mit einem Substituenten substituiert ist, der durch Alkali unter Bildung der Vinylsulfonyl-Gruppe eliminierbar ist;
- Z'': die gleiche Bedeutung wie Z' hat oder eine Carboxy-, Sulfo- oder Sulfonamid-Gruppe entsprechend der allgemeinen Formel (III) bedeutet 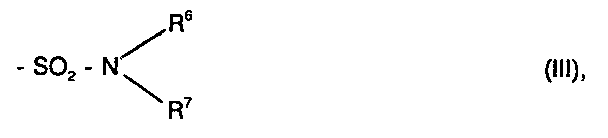
in welcher
- R⁶: ein Wasserstoffatom, eine C₁-C₄-Alkylgruppe oder eine durch eine Sulfo-, Sulfato-, Phosphato- oder Carboxygruppe substituierte C₁-C₄-Alkylgruppe, ist und
- R⁷: ein Wasserstoffatom oder eine C₁-C₄-Alkylgruppe, die durch 1 oder 2 Substituenten aus der Gruppe Sulfato, Sulfo, Carboxy und Phosphato substituiert sein kann, oder eine Arylgruppe, vorzugsweise eine Phenylgruppe oder Naphthylgruppe, die durch 1 bis 3 Substituenten aus der Gruppe Sulfo und Carboxy substituiert sein kann, oder eine durch eine Arylgruppe substituierte C₁-C₄-Alkylgruppe, die im Arylrest durch 1 bis 3 Substituenten aus der Gruppe Sulfo und Carboxy substituiert sein kann, bedeutet;
- R¹: ein Wasserstoffatom, eine C₁-C₄-Alkylgruppe oder eine durch eine Sulfo-, Sulfato-, Phosphato- oder Carboxygruppe substituierte C₁-C₄-Alkylgruppe ist;
- R² und R³: unabhängig voneinander jeweils ein Wasserstoffatom, eine Sulfogruppe, eine Carboxygruppe, eine C₁-C₄-Alkylgruppe, vorzugsweise eine Methylgruppe, eine Alkoxygruppe mit 1 bis 4 C-Atomen, vorzugsweise eine Methoxygruppe, oder ein Halogenatom, vorzugsweise Chlor oder Brom, sind;
- R⁴: eine Gruppe der allgemeinen Formel (IV) 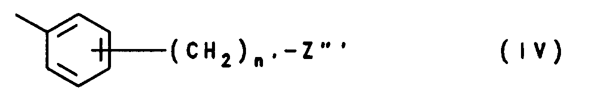 in welcher
- Z''': die gleiche Bedeutung wie Z' hat, vorzugsweise die β-Chlorethylsulfonyl-Gruppe ist, und
- n': eine ganze Zahl von Null bis 3 bedeutet, oder eine Gruppe der allgemeinen Formel (V)

-(CH₂)ₙ-Z' (V)

in welcher
- Z': die obengenannte Bedeutung hat und
- n: für eine ganze Zahl von 1 bis 3 steht, bedeutet;
- M: ein Wasserstoffatom oder ein Alkalimetallatom, vorzugsweise Natrium, Kalium oder Lithium, bedeutet;
- n₁, n₂, n₃ und n₄: unabhängig voneinander jeweils für eine ganze Zahl von 1 bis 3 stehen;
- A: eine Sulfo-, Sulfato-, Phosphato- oder Carboxygruppe bedeutet;
- B: ein Brückenglied aus der Gruppe -O-, -S-, -SO₂-, -C(=O)-, -NH-, -NH-C(=O)- oder -C(=O)-NH- bedeutet;
- D: eine Hydroxy-, Sulfo-, Cyanamid- oder eine Alkoxygruppe mit 1 bis 4 C-Atomen, vorzugsweise eine Methoxygruppe, oder ein Halogenatom, insbesondere Fluor oder Chlor, oder eine Gruppe der allgemeinen Formel (VI)

-NR⁶R⁷ (VI),

in welcher R⁶ und R⁷ die obengenannten Bedeutungen haben, oder eine Gruppe der allgemeinen Formel (VII) 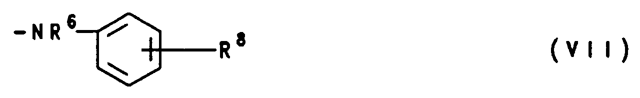 in welcher
- R⁶: die obengenannten Bedeutungen hat
- R⁸: ein Halogenatom, vorzugsweise Chlor, oder eine Sulfogruppe oder eine Sulfonamidgruppe entsprechend der vorstehend definierten allgemeinen Formel (III) oder eine Carboxygruppe, eine β-Sulfatoethylsulfonyl-Gruppe, eine Vinylsulfonyl-Gruppe oder eine Ethylsulfonyl-Gruppe, die in β-Stellung mit einem Substituenten substituiert ist, der durch Alkali unter Bildung der Vinylsulfonyl-Gruppe eliminierbar ist, und
- X: ein Halogenatom, vorzugsweise Chlor oder Fluor, ist.

Ethylsulfonyl-Gruppen, die β-Stellung mit Substituenten substituiert sind, die durch Alkali unter Bildung der Vinylsulfonyl-Gruppe eliminierbar sind, sind beispielsweise die β-Chlorethylsulfonyl-, β-Sulfatoethylsulfonyl-, β-Phosphatoethylsulfonyl- und die β-Thiosulfatoethylsulfonyl-Gruppe.

Die in den einzelnen Formeln zweifach oder mehrfach auftretenden gleichen Symbole können jeweils die gleiche Bedeutung oder eine voneinander verschiedene Bedeutung besitzen; die jeweils zweifach auftretenden gleichen Symbole in der allgemeinen Formel (I) besitzen bevorzugt die jeweils gleiche Bedeutung. Im übrigen können die verschiedenen Symbole Bedeutungen besitzen, die im Rahmen der angegebenen Bedeutungen zueinander gleich oder voneinander verschieden sind.

In den vorstehenden und in den nachstehenden Angaben sind Carboxygruppen Gruppen der allgemeinen Formel -COOM mit M in den obengenannten Bedeutungen; ebenso sind Sulfogruppen Gruppen der allgemeinen Formel -SO₃M, Phosphatogruppen Gruppen der allgemeinen Formel -PO₃M₂ und Sulfatogruppen Gruppen der allgemeinen Formel -OSO₃M, jeweils mit M in den obengenannten Bedeutungen.

In der erfindungsgemäßen Farbstoffzusammensetzung sind der oder die Farbstoffe der allgemeinen Formel (I) und der oder die Farbstoffe der allgemeinen Formel (IIa bis IIf) im Verhältnis 90:10 bis 10:90, vorzugsweise 60:40 bis 10:90, insbesondere 40:60 bis 15:85, Gewichtsteilen enthalten und finden in diesem Verhältnis ihre Verwendung zum Färben.

Bevorzugte erfindungsgemäße Farbstoffzusammensetzungen sind solche mit Farbstoffen der allgemeinen Formeln (I) und (II), in welchen
- Z': eine Vinylsulfonyl- oder eine β-Sulfatoethylsulfonyl-Gruppe;
- Z'': eine Vinylsulfonyl-, β-Sulfatoethylsulfonyl-, Sulfo- oder eine Sulfamid-Gruppe entsprechend der allgemeinen Formel (III), in welcher R⁶ für ein Wasserstoffatom und R⁷ für ein Wasserstoffatom, eine Phenyl- oder Naphthylgruppe, vorzugsweise ein Wasserstoffatom, stehen;
- R¹: ein Wasserstoffatom oder eine Methylgruppe;
- R²: ein Wasserstoffatom, eine Methyl- oder Methoxygruppe, ein Chlor- oder Bromatom, vorzugsweise ein Wasserstoffatom;
- R³: ein Wasserstoffatom, eine Sulfo- oder eine Carboxy-Gruppe, eine Methyl- oder Methoxygruppe, ein Chlor- oder Bromatom, vorzugsweise ein Wasserstoffatom;
- R⁴: eine Gruppe der allgemeinen Formel (IV), in welcher Z''' eine Vinylsulfonyl-, β-Sulfatoethylsulfonyl- oder eine β-Chlorethylsulfonyl-Gruppe ist und n' für die Zahl Null oder 1 steht oder eine Gruppe der allgemeinen Formel (V), in welcher Z' eine Vinylsulfonyl-, β-Sulfatoethylsulfonyl- oder die β-Chlorethylsulfonyl-Gruppe ist und n für die Zahl 2 oder 3 steht;
- M: ein Wasserstoffatom oder ein Alkalimetallatom, vorzugsweise Natrium, Kalium oder Lithium;
- n₁ und n₄: jeweils eine gleiche Zahl von 1 bis 3;
- n₂ und n₃: jeweils eine gleiche Zahl von 1 bis 3;
- A: eine Carboxy- oder Sulfogruppe;
- B: ein Brückenglied aus der Gruppe -NH-C(=O)- oder -C(=O)-NH-;
- D: eine Methoxygruppe oder eine Gruppe der allgemeinen Formel (VII), in welcher R⁶ für ein Wasserstoffatom steht und R⁸ ein Chloratom oder eine Sulfo-, Vinylsulfonyl- oder β-Sulfatoethylsulfonyl-Gruppe ist; und
- X: ein Chlor- oder Fluoratom
bedeuten.

Besonders bevorzugt sind Farbstoffzusammensetzungen mit solchen Farbstoffen der allgemeinen Formeln (II), in welchen
- R² und R³: jeweils ein Wasserstoffatom bedeuten;
- R⁴: eine Gruppe der allgemeinen Formel (IV), in welcher Z''' eine Vinylsulfonyl- oder eine β-Chlorethylsulfonyl-Gruppe ist und
- D: eine Methoxygruppe oder eine Gruppe der allgemeinen Formel (VII), in welcher R⁸ jeweils in meta-Stellung ein Chloratom, eine Vinylsulfonyl- oder eine β-Sulfatoethylsulfonyl-Gruppe ist.

Besonders bevorzugt sind ferner Farbstoffzusammensetzungen mit solchen Farbstoffen der allgemeinen Formel (I), in der R¹ für ein Wasserstoffatom steht.

Bevorzugt sind ferner Farbstoffzusammensetzungen aus jeweils nur einem Farbstoff der Farbstoffkomponenten (I) und (II).

Die folgenden erfindungsgemäßen Farbstoffzusammensetzungen sind besonders für die Zwecke der vorliegenden Erfindung geeignet:
a) Zusammensetzung aus einem Farbstoff der allgemeinen Formel (XIX) und einem Farbstoff der allgemeinen Formel (VIII) 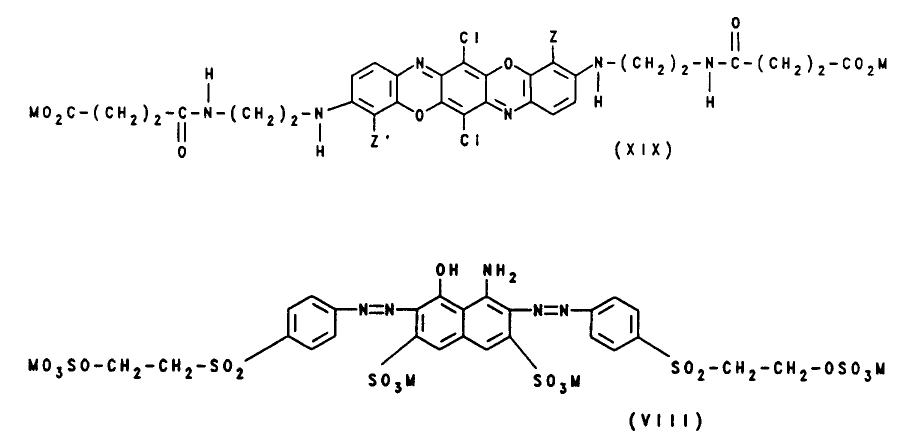 in welcher
   - M: Wasserstoff oder ein Alkalimetallatom, vorzugsweise Lithium, Natrium oder Kalium, und
   - Z': eine Vinylsulfonyl- oder β-Sulfatoethylsulfonyl-Gruppe bedeuten;
b) Zusammensetzung aus einem Farbstoff der Formel (XIX) und einem Farbstoff der Formel (IX) 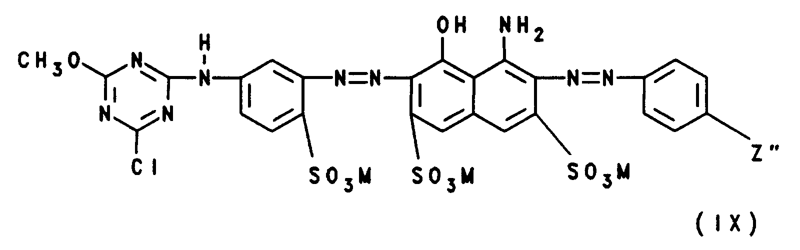 in welcher M die unter a) genannten Bedeutungen besitzt und Z'' eine Vinylsulfonyl- oder eine β-Sulfatoethylsulfonyl-Gruppe ist;
c) Zusammensetzung aus einem Farbstoff der Formel (XIX) und einem Farbstoff der Formel (X) 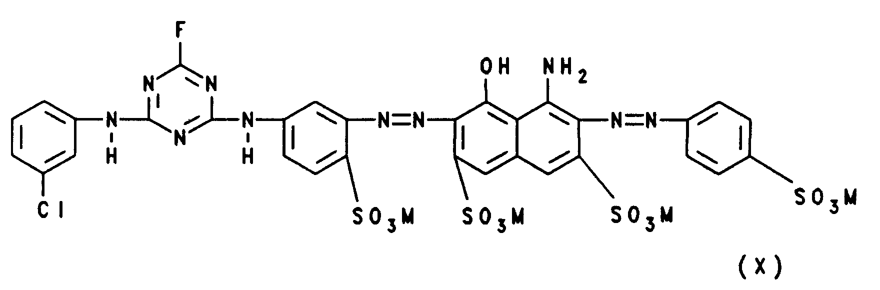 in welcher M die unter a) genannten Bedeutungen besitzt;
d) Zusammensetzung aus einem Farbstoff der obengenannten und definierten Formel (XIX) und einem Farbstoff der allgemeinen Formel (XI) 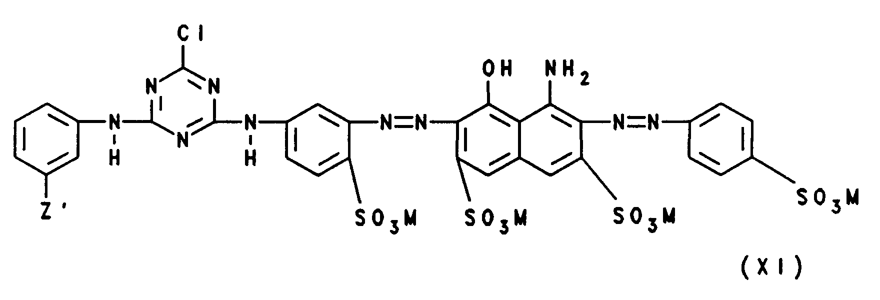 in welcher M die unter b) genannten Bedeutungen besitzt und Z' eine Vinylsulfonyl- oder eine β-Sulfatoethylsulfonyl-Gruppe ist;
e) Zusammensetzung aus einem Farbstoff der obengenannten und definierten Formel (XIX) und einem Farbstoff der allgemeinen Formel (XII) 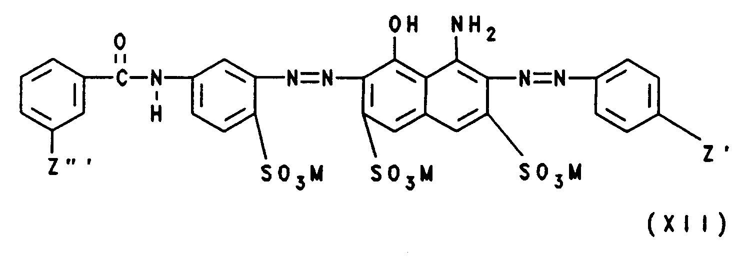 in welcher M und Z' die unter d) genannten Bedeutungen besitzen und Z''' eine Vinylsulfonylgruppe ist oder eine Gruppe, die unter den üblichen alkalischen Färbebedingungen die Vinylsulfonylgruppe bilden kann, wie insbesondere die β-Sulfatoethylsulfonyl- oder die β-Chlorethylsulfonylgruppe;
f) Zusammensetzung aus einem Farbstoff der obengenannten und definierten Formel (XIX) und einem Farbstoff der allgemeinen Formel (XIII) 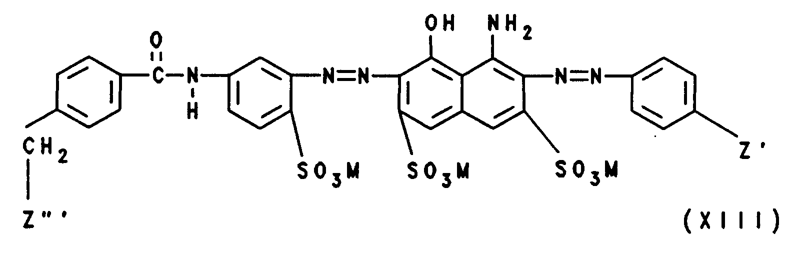 in welcher M, Z' und Z''' die unter e) genannten Bedeutungen haben;
g) Zusammensetzung aus einem Farbstoff der obengenannten und definierten Formel (XIX) und einem Farbstoff der allgemeinen Formel (XIV) 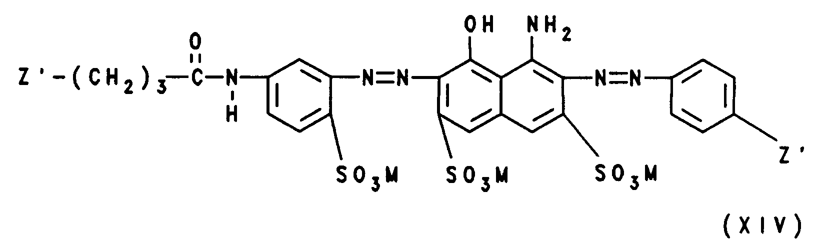 in welcher M die unter a) und Z' die unter d) genannten Bedeutungen besitzen oder Z' β-Chlorethylsulfonyl bedeutet;
h) Zusammensetzung aus einem Farbstoff der obengenannten und definierten Formel (XIX) und einem Farbstoff der allgemeinen Formel (XV) 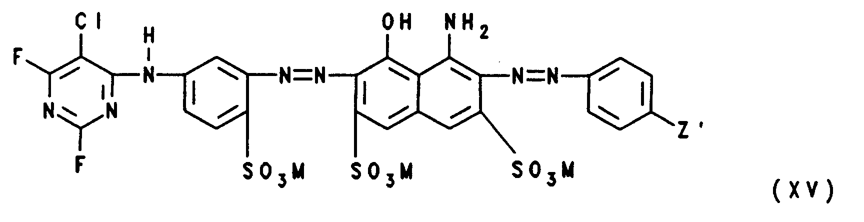 in welcher M und Z' die unter d) genannten Bedeutungen besitzen;
i) Zusammensetzung aus einem Farbstoff der obengenannten und definierten Formel (XIX) und einem Farbstoff der allgemeinen Formel (XVI) 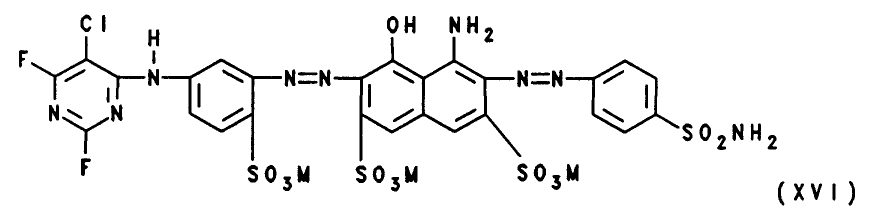 in welcher M die unter a) genannte Bedeutung besitzt;
j) Zusammensetzung aus einem Farbstoff der obengenannten und definierten Formel (XIX) und einem Farbstoff der allgemeinen Formel (XVII) 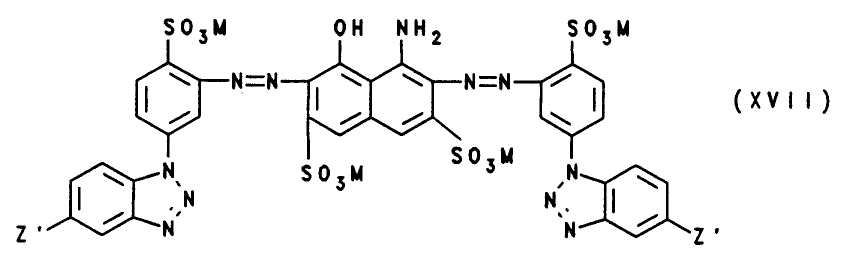 in welcher M und Z' die unter d) genannten Bedeutungen besitzen;
k) Zusammensetzung aus einem Farbstoff der obengenannten und definierten Formel (XIX) und einem Farbstoff der allgemeinen Formel (XVIII) 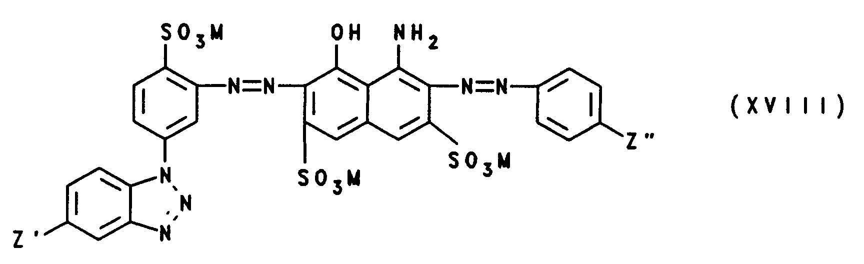 in welcher M und Z'' die unter b) und Z' die unter d) genannten Bedeutungen besitzen.

Die einzelnen Farbstoffe der allgemeinen Formeln (I) und (II) sind bekannt oder in ihrem chemischen Aufbau bekannten Farbstoffen analog, so daß die per se noch nicht beschriebenen Farbstoffe analog den per se beschriebenen Farbstoffen hergestellt werden können.

Farbstoffe der allgemeinen Formel (I) sind aus der US-PS 4 629 788 und der US-A 4 774 333 bekannt; die Farbstoffe der allgemeinen Formel (IIa) sind in US-A 4 492 654, in der GB-PS 1 183 661 und in der US-PS 2 657 205 (Spalten 9/10), die Farbstoffe der allgemeinen Formel (IIb) in der US-PS-4 412 948 und in der GB-A-2 029 850, die Farbstoffe der allgemeinen Formel (IIc) in der US-A 4 818 814, die Farbstoffe der allgemeinen Formel (IId) in den US-A 3 669 951, 4 052 386, 3 822 263, 3 910 758 und 4 007 164 und in der US-A 4 500 321 und die Farbstoffe der allgemeinen Formeln (IIe) und (IIf) in der US-A 4 946 947 beschrieben.

Die erfindungsgemäßen Farbstoffzusammensetzungen können in fester, pulvriger Form oder in Form von Granulaten vorliegen mit einem Gesamtfarbstoffgehalt der Farbstoffe (I) und (II) von 20 bis 80 Gew.-%, vorzugsweise 40 bis 60 Gew.-%. In der Regel enthalten die Farbstoffzusammensetzungen die üblichen Elektrolytsalze, wie Natriumchlorid, Kaliumchlorid und Natriumsulfat. Desweiteren können die Farbstoffzusammensetzungen Puffersubstanzen enthalten, beispielsweise Alkaliacetat, Natriumhydrogenphosphat, Dinatriumhydrogenphosphat und Natriumborat. Weiterhin können die Farbstoffzusammensetzungen andere für Farbstoffpräparationen übliche Substanzen enthalten wie Granulierhilfsmittel, Zusätze zur Entstaubung, löslichkeitsverbessernde Stellmittel, Sikkative, Fungizide und Färbereihilfsmittel.

Die erfindungsgemäßen Farbstoffzusammensetzungen können auch in Form einer flüssigen Lösung vorliegen, insbesondere als wäßrige Lösung mit einem Gesamtfarbstoffgehalt der Farbstoffe (I) und (II) von mindestens 10 Gew.-%, bevorzugt zwischen 10 und 50 Gew.-%. Die Lösung kann ebenfalls die für die festen Präparationen genannten üblichen Zusätze sowie Dispergierhilfsmittel enthalten. Die flüssige Lösung besitzt bevorzugt einen pH-Wert zwischen 4 und 7.

Die erfindungsgemäßen Farbstoffzusammensetzungen enthalten bevorzugt nur einen Farbstoff der Formel (I) und nur einen Farbstoff der Formel (II). Für die erfindungsgemäße Anwendung sind aber auch solche Farbstoffzusammensetzungen geeignet, die mehrere Farbstoffe der Formel (I) in beliebigen Mengenverhältnissen untereinander enthalten. Ebenfalls sind Farbstoffzusammensetzungen geeignet, die mehrere Farbstoffe der Formel (II) in beliebigen Mengenverhältnissen untereinander enthalten.

Die erfindungsgemäßen Farbstoffzusammensetzungen der allgemeinen Formeln (I) und (II) können zusätzlich und in beliebigen Mischungsverhältnissen noch faserreaktive Farbstoffe anderer Konstitution und Nuance enthalten, mit denen in üblicher Weise Mischnuancen auf dem Fasermaterial erhältlich sind.

Die mit den erfindungsgemäßen Farbstoffzusammensetzungen egal und in guten Echtheiten färbbaren carbonamidgruppenhaltigen Materialien sind beispielsweise synthetische Polyamidfasermaterialien und Wolle. Bevorzugt und vorteilhaft werden jedoch hydroxygruppenhaltige Fasermaterialien, insbesondere Cellulosefasermaterialien wie Baumwolle, Regeneratcellulose und Bastfasern, mit den erfindungsgemäßen Farbstoffzusammensetzungen egal und in guten Echtheiten gefärbt.

Die erfindungsgemäßen Farbstoffzusammensetzungen lassen sich in üblicher Weise herstellen, beispielsweise durch Vermischen der einzelnen festen Farbstoffkomponenten der Formeln (I) und (II), die aus der Syntheselösung durch Aussalzen, Sprühtrocknung oder Granulierung erhältlich sind, oder durch Vermischen der jeweiligen Syntheselösungen der einzelnen Farbstoffkomponenten und anschließende gemeinsame Isolierung als Farbstofflösung, als Farbstoffpulver durch Aussalzen oder Sprühtrocknen oder als Granulat. Hierbei können die üblichen, oben genannten Zusätze den Lösungen vor der Farbstoffisolierung oder den festen Einzelkomponenten oder deren Mischungen zugegeben werden.

Die erfindungsgemäßen Farbstoffzusammensetzungen lassen sich nach den üblichen Applikations- und Fixierverfahren anwenden.

Die erfindungsgemäßen Farbstoffzusammensetzungen zeichnen sich durch eine sehr gute Wasserlöslichkeit aus und besitzen eine hohe Affinität zum Färbesubstrat, so daß Färbungen und Drucke mit hohen Farbtiefen und Ausbeuten erzielt werden. Trotz ihrer hohen Faseraffinität liefern die erfindungsgemäßen Farbstoffmischungen Färbungen von hoher Egalität, da die beiden Farbstoffkomponenten der Formeln (I) und (II) überraschenderweise homogen auf dem Substrat fixieren.

Die erfindungsgemäßen Farbstoffzusammensetzungen können auch Hilfsmittel zum Färben oder Drucken, wie sie für die Anwendung von Reaktivfarbstoffen üblich sind, enthalten. Hilfsmittel sind beispielsweise Wasser oder hydrotrope Mittel wie Glycerin, Glykol- oder Polyglykolether oder Harnstoff, Oxidationsmittel gegen die Reduktionswirkung der Cellulose, wie 2,4-Dinitrobenzolsulfonsäure oder 3-Nitrobenzolsulfonsäure, Salze zur Erhöhung der Fixierausbeute, wie Natriumchlorid oder Natriumsulfat, oder Netzmittel, organische Lösemittel oder Fixiermittel, wie Natronlauge, Soda, Natriumhydrogencarbonat, Wasserglas und Trinatriumphosphat.

Insbesondere vorteilhaft zeigt sich dieses färberische Verhalten der erfindungsgemäßen Farbstoffzusammensetzungen in den Färbeweisen des Ausziehverfahrens aus wäßrigem Bad, wobei bevorzugt mit einem Flottenverhältnis von 1:5 bis 1:50 und einer Färbetemperatur von 30 bis 80°C gefärbt wird. Das Ausziehverfahren wird im alkalischen Medium unter Verwendung verschiedenster Alkalizusätze, wie sie für die Färbung von Zellulosefasern mit Reaktivfarbstoffen vom Vinylsulfontyp üblich sind, beispielsweise Natronlauge, Soda oder Natriumbicarbonat sowie weiterer Färbereihilfsmittel, wie Natriumchlorid oder Natriumsulfat, durchgeführt.

Es gelingt mit den erfindungsgemäßen Farbstoffzusammensetzungen, bis zur sechsfachen der empfohlenen und optimalen Färbezeit bei der jeweiligen Färbetemperatur zu färben, ohne daß sich Farbstärke und Farbton der gefärbten Faser signifikant ändern.

Die erfindungsgemäßen Farbstoffzusammensetzungen können als solche in der festen Form, d.h. einzeln oder als feste Mischung oder in einer flüssigen, gelösten Form, d.h. als Lösung der einzelnen Farbstoffe oder als Mischung dieser Lösungen vom Färber oder Drucker angewendet werden. Es ist jedoch auch möglich, die Farbstoffkomponenten der Formeln (I) und (II) im angegebenen Mischungsbereich getrennt in das Färbebad, in die Färbeflotte oder in die Druckpaste einzusetzen bzw. einzuarbeiten.

An Stelle der direkten Anwendung von festen Farbstoffpulvern der einzelnen erfindungsgemäß verwendeten Farbstoffe oder deren festen Mischungen können die erfindungsgemäß verwendeten Farbstoffe auch zuvor in einer lagerstabilen wäßrigen Lösung eingesetzt werden. Eine wäßrige lagerstabile Lösung der erfindungsgemäßen Farbstoffgemische erhält man beispielsweise durch Lösen von entsprechenden Mengen des Farbstoffes der Formel (I) und des Farbstoffes der Formel (II) oder einer Mischung derselben in Wasser unter Zusatz eines Puffers, der die Lösung auf einen pH-Wert zwischen 3 und 7 einzustellen und zu halten vermag.

Die Erfindung betrifft deshalb nicht nur die Verwendung von Farbstoffmischungen der allgemeinen Formeln (I) und (II) in den angegebenen Mischungsverhältnissen, sondern auch die gleichzeitige Verwendung von Farbstoffen der allgemeinen Formeln (I) und (II) in den angegebenen Mengenverhältnissen beim Färben einschließlich Bedrucken von carbonamidgruppenhaltigen oder bevorzugt hydroxygruppenhaltigen Fasermaterialien nach den für faserreaktiven Farbstoffen üblichen Färbe- oder Druckverfahren.

Die nachfolgenden Beispiele dienen zur Erläuterung der Erfindung. Die Teile sind Gewichtsteile und die Prozentangaben beziehen sich auf Gewichtsprozente, sofern nicht anders vermerkt. Gewichtsteile verhalten sich zu Volumenteilen wie Kilogramm zu Liter. Die in den Beispielen vorkommenden Formeln sind in Form der freien Säure angegeben, die betreffenden Farbstoffe werden jedoch in der Regel in Form der Alkalisalze eingesetzt.

### Beispiel 1

50 Teile eines gebleichten Baumwolltrikots wurden bei einer Temperatur von 20°C bis 25°C in eine Lösung von 0,13 Teilen des Farbstoffes der Formel (A), 0,45 Teilen des Farbstoffes mit der Formel (B) und 50 Teilen Natriumsulfat-decahydrat in 1000 Teilen Wasser eingebracht. 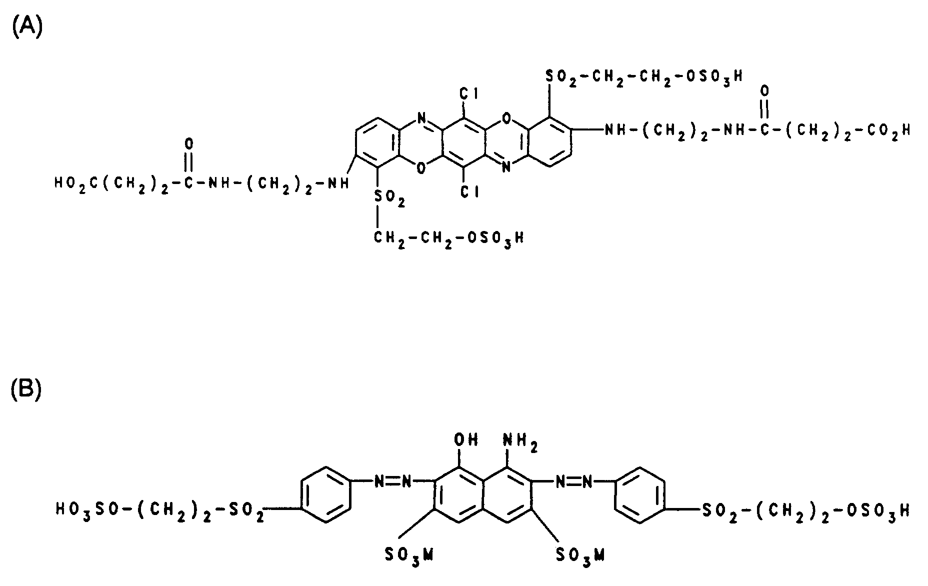
Anschließend wurden 5 Teile wasserfreies Natriumcarbonat und 0,5 Teile einer wäßrigen 32 %igen Natronlauge hinzugegeben. Unter guter Bewegung des Baumwollmaterials wurde das Färbebad innerhalb von 30 Minuten auf 60°C erwärmt und die Färbung während 60 Minuten bei dieser Temperatur fortgeführt. Anschließend wurde das gefärbte Material in üblicher Weise fertiggestellt, das heißt durch Spülen mit kaltem und warmem Wasser, durch Neutralisation in einem wäßrigen, verdünnte Essigsäure enthaltenden Bad und anschließendes Kochen in einer ein nicht-ionogenes Waschmittel enthaltenden wäßrigen Waschlösung, durch nochmaliges Spülen mit warmem und kaltem Wasser und anschließendes Trocknen.

Es wurde eine farbtiefe, egale und lebhafte marineblaue Färbung mit guten Licht- und Naßlichtechtheiten erhalten.

### Vergleichsbeispiel 1a:

Man verfuhr gemäß der Verfahrensweise des Beispiels 1, jedoch unter Verwendung von 0,5 Teilen des Farbstoffes (A) als einzigen Farbstoff. Man erhielt eine klare, blaue Färbung mit schlechter Egalität.

### Vergleichsbeispiel 1b:

Man verfuhr gemäß der Verfahrensvariante des Beispiels 1, jedoch unter Verwendung von 0,5 Teilen des Farbstoffes (B) als einzigen Farbstoff. Man erhielt eine Färbung mit einem trüben marineblauen Farbton und mit schlechten Licht- und Naßlichtechtheiten.

### Vergleichsbeispiele 1c bis 1h und Beispiele 1i bis 1n (Verlängerung der Färbezeit):

Man verfuhr gemäß der Verfahrensweise des Beispiels 1, jedoch gemäß der folgenden Tabelle unter Verlängerung der Färbedauer bei 60°C. Die Färbung des Farbstoffs (A) verlor an Farbstärke (Vergleichsbeispiele 1c bis 1h), während die Farbstärke der Färbung mit der Mischung aus Farbstoff A und B (Beispiele 1i bis 1n) sich nicht signifikant veränderte.

| Beispiel | Teile Farbstoff (A): Teile Farbstoff (B): | | Färbedauer in Stunden | Relative Remissionsfarbstärke in % |
|---|---|---|---|---|
| 1c | 0,5 | : 0 | 0,5 | 99 |
| 1d | 0,5 | : 0 | 1,0 | 100 |
| 1e | 0,5 | : 0 | 1,5 | 98 |
| 1f | 0,5 | : 0 | 2,0 | 94 |
| 1g | 0,5 | : 0 | 3,0 | 90 |
| 1h | 0,5 | : 0 | 4,0 | 85 |
| 1i | 0,13 | : 0,45 | 0,5 | 100 |
| 1j | 0,13 | : 0,45 | 1,0 | 100 |
| 1k | 0,13 | : 0,45 | 1,5 | 100 |
| 1l | 0,13 | : 0,45 | 2,0 | 99 |
| 1m | 0,13 | : 0,45 | 3,0 | 99 |
| 1n | 0,13 | : 0,45 | 4,0 | 98 |

### Beispiel 2

100 Teile eines Gewebes aus mercerisierter Baumwolle wurden bei einer Temperatur von 20°C bis 25°C in eine Lösung von 0,6 Teilen des Farbstoffes (A), 1,2 Teilen des Farbstoffes (B) und 50 Teilen Natriumsulfat-decahydrat in 1000 Teilen Wasser eingebracht. Sodann wurden 5 Teile wasserfreies Natriumcarbonat und 2 Teile einer wäßrigen 32 %igen Natronlauge hinzugegeben. Unter guter Bewegung des Baumwollmaterials wurde das Färbebad innerhalb von 15 Minuten auf 40°C erwärmt, und die Färbung wurde 90 Minuten bei dieser Temperatur weitergeführt. Anschließend wurde das erhaltene gefärbte Material in üblicher Weise, so gemäß Beispiel 1, fertiggestellt. Man erhielt ebenfalls eine farbtiefe, gleichmäßige marineblaue Färbung mit den in Beispiel 1 genannten guten Echtheitseigenschaften. Bei Verlängerung der Färbezeit auf 6 Stunden änderte sich Farbstärke und Farbton nicht signifikant, während bei einer Kontrollfärbung mit nur 1 Teil des Farbstoffes (A) nach 6 Stunden ein Farbstärkeverlust von ca. 15 % beobachtet wurde (Farbstärke nach 90 Minuten = 100 %).

### Beispiel 3

Man verfuhr gemäß der Verfahrensweise des Beispiels 1, verwendete jedoch an Stelle des zu färbenden Materials 200 Teile eines Gewebes aus einer Fasermischung von 67 Teilen Polyesterfasern und 33 Teilen Baumwolle. Man erhielt eine Färbung mit gleichmäßigem marineblauen Farbton des Baumwollanteils, die ebenfalls die in Beispiel 1 genannten guten Echtheiten aufweist.

Der Polyesterfaseranteil wurde in üblicher Weise mit einem entsprechenden Dispersionsfarbstoff nach sowie vor der Fixierung der erfindungsgemäßen faserreaktiven Farbstoffzusammensetzungen getrennt gefärbt bzw. überfärbt; man erhielt so eine gleichmäßige Unifärbung des gesamten Gewebes in farbtiefen marineblauen Tönen.

Bei Verlängerung der Färbezeit auf 4 Stunden änderten sich Farbstärke und Farbton nicht signifikant, während bei einer Kontrollfärbung mit 0,6 Teilen des Farbstoffes (A) als einzigen Farbstoff nach 4 Stunden ein Farbstärkeverlust von ca. 15 % beobachtet wurde (Farbstärke nach 1 Stunde = 100 %).

### Beispiele 4 bis 8

Man verfuhr jeweils gemäß der Verfahrensweise des Beispiels 1, setzte jedoch die beiden Farbstoffe (A) und (B) in anderen Mischungsverhältnissen, wie nachfolgend tabellarisch angegeben, ein. Man erhielt auf diese Weise ebenfalls egale Färbungen ohne Streifen und Flecken und mit den genannten guten Echtheitseigenschaften in einer für das jeweilige Tabellenbeispiel angegebenen Marineblau-Nuance.

| Beispiel | Teile Farbstoff (A) | Teile Farbstoff (B) | Marineblau-Nuance |
|---|---|---|---|
| 4 | 0,2 | 1,6 | rotstichig |
| 5 | 0,5 | 1,3 | neutral |
| 6 | 0,8 | 1,0 | grünstichig |
| 7 | 1,1 | 0,7 | grünstichig |
| 8 | 1,4 | 0,4 | grünstichig |

### Beispiel 9

Ein Gewebe aus mercerisierter Baumwolle wurde bei einer Temperatur von etwa 20°C mit einer Flottenaufnahme von 70 % mit einer Färbeflotte geklotzt. Letztere wurde hergestellt durch Mischen von 4 Teilen einer Lösung, die pro Liter neben Wasser 6 Teile des Farbstoffes der Formel (A), 8 Teile des Farbstoffes der Formel (B), 100 Teile Harnstoff und 3 Teile eines handelsüblichen Netzmittels enthielt, mit 1 Teil einer Lösung, die aus 23 Teilen einer wäßrigen 32 %igen Natronlauge und 95 Teilen eines wäßrigen Wasserglases, dessen Gehalt 38°Bé und dessen Na₂O:SiO₂-Verhältnis 1:3,3 war, hergestellt wurde. Das geklotzte Gewebe wurde sofort luftdicht in eine Folie gewickelt und 15 Stunden bei 20°C verweilen gelassen. Das gefärbte Material wurde anschließend in üblicher Weise, so gemäß Beispiel 1, fertiggestellt.

Man erhielt eine kräftige marineblaue Färbung mit guter Egalität und guten Licht- und Naßlichtechtheiten.

### Beispiel 10

Man stellte eine wäßrige Druckpaste her, die pro 2 g neben Wasser 10 Teile des Farbstoffes der Formel (A), 8 Teile des Farbstoffes der Formel (C), 450 Teile einer wäßrigen 8 %igen Natriumalginat-Verdickung, 3 Teile Natriumdihydrogenphosphat und 10 Teile des Natriumsalzes der 2,4-Dinitrobenzosulfonsäure enthielt.

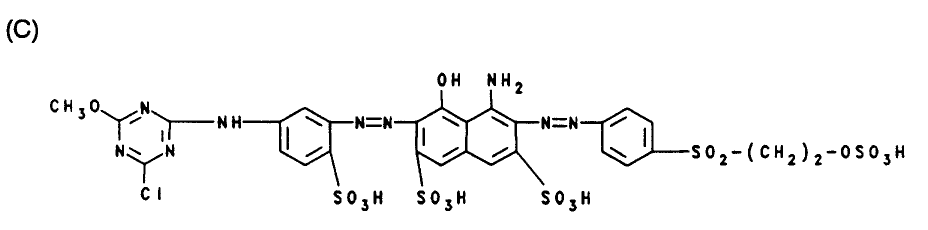

Mit dieser Druckpaste wurde ein Gewebe aus mercerisierter Baumwolle im Filmdruckverfahren bedruckt. Anschließend wurde das bedruckte Gewebe während 25 Sekunden bei 110°C gedämpft und sodann mit einer Lösung, mit einer Flottenaufnahme von 70 % überklotzt, wobei die Lösung pro Liter neben Wasser 100 Teile Natriumchlorid, 100 Teile wasserfreies Natriumcarbonat, 100 Teile wasserfreies Kaliumcarbonat und 80 Teile einer wäßrigen 32 %igen Natronlauge enthielt, sodann nochmals 8 Sekunden bei 110⁰C gedämpft und anschließend durch Spülen mit kaltem und warmen Wasser, durch Kochen in einer ein nichtionogenes Waschmittel enthaltenden Waschlösung, durch nochmaliges Spülen in warmem und kaltem Wasser und Trocknen fertiggestellt.

Man erhielt einen farbstarken, marineblauen Druck von hoher Egalität und guten Licht- und Naßlichtechtheiten.

### Beispiel 11

Man löste 3,5 Teile des Farbstoffes (A) und 6,5 Teile des Farbstoffes (B) in 100 Teilen Wasser und stellte anschließend den pH-Wert mit einem Natriumhydrogenphosphat/Dinatriumhydrogenphosphat-Puffer auf einen Wert von etwa 5 ein. Diese lagerstabile Flüssigeinstellung der erfindungsgemäßen Farbstoffzusammensetzung konnte auch nach einer Lagerzeit von mehreren Wochen ohne Verlust der färberischen Eigenschaften zum Färben von Cellulosefasermaterialien, wie Baumwolle, gemäß einer der in den vorherigen Beispielen angegebenen Färbeweisen eingesetzt werden.

### Beispiele 12 bis 21

In der nachfolgenden Tabelle sind weitere Beispiele der erfindungsgemäßen Farbstoffzusammensetzung beschrieben, die zum Färben von Cellulosefasermaterialien eingesetzt wurden, beispielsweise gemäß einer der in den vorstehenden Ausführungsbeispielen beschriebenen Färbeweise. Man erhielt ebenfalls farbstarke Färbungen von guter Egalität und mit guten Licht- und Naßlichtechtheiten.

| Beispiel | Farbstoff der Formel (II): | | Mischungsverhältnis Farbstoff (XIX): Farbstoff (II) |
|---|---|---|---|
| | Formel | Definition der reaktiven Substituenten Z', Z'' oder Z''' | |
| 12 | (IX) | Z' = β-Sulfatoethylsulfonyl | 1 : 3,0 |
| 13 | (X) | wie angegeben | 1 : 1,1 |
| 14 | (XI) | Z' = Vinylsulfonyl | 1 : 1,2 |
| 15 | (XII) | Z' = β-Sulfatoethylsulfonyl | 1 : 2,8 |
| | | Z''' = β-Chlorethylsulfonyl | |
| 16 | (XIII) | Z' = β-Sulfatoethylsulfonyl | 1 : 4,0 |
| | | Z''' = β-Chlorethylsulfonyl | |
| 17 | (XIV) | Z' = Vinylsulfonyl | 1 : 0,8 |
| 18 | (XV) | Z' = β-Sulfatoethylsulfonyl | 1 : 5,0 |
| 19 | (XVI) | wie angegeben | 1 : 1,5 |
| 20 | (XVII) | Z' = β-Sulfatoethylsulfonyl | 1 : 2,3 |
| 21 | (XVIII) | Z'=Z'' = β-Sulfatoethylsulfonyl | 1 : 1,0 |

In allen aufgeführten Beispielen beeinflußt die Verlängerung der Färbezeit auf 4 Stunden das Färbeergebnis, d.h. Farbstärke und Farbton der Färbung, nicht signifikant, wenn eine erfindungsgemäße Farbstoffzusammensetzung zum Färben verwendet wird.

## Patentansprüche

1. Farbstoffzusammensetzung von wasserlöslichen faserreaktiven Farbstoffen, dadurch gekennzeichnet, daß die Farbstoffzusammensetzung mindestens einen Dioxazinfarbstoff entsprechend der allgemeinen Formel (I) und mindestens einen Disazofarbstoff entsprechend den allgemeinen Formeln (IIa), (IIb), (IIc), (IId), (IIe) und (IIf) im Verhältnis von 90:10 bis 10:90 Gewichtsteilen der Farbstoffe (I) und (II) enthält oder im wesentlichen daraus besteht, 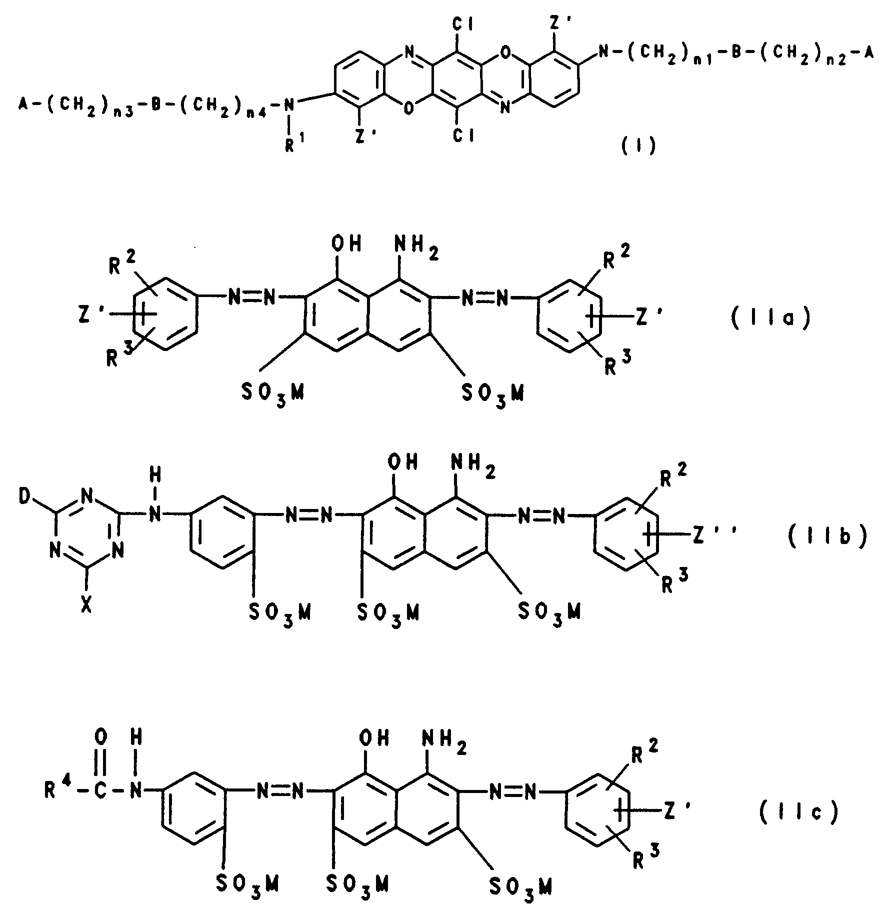 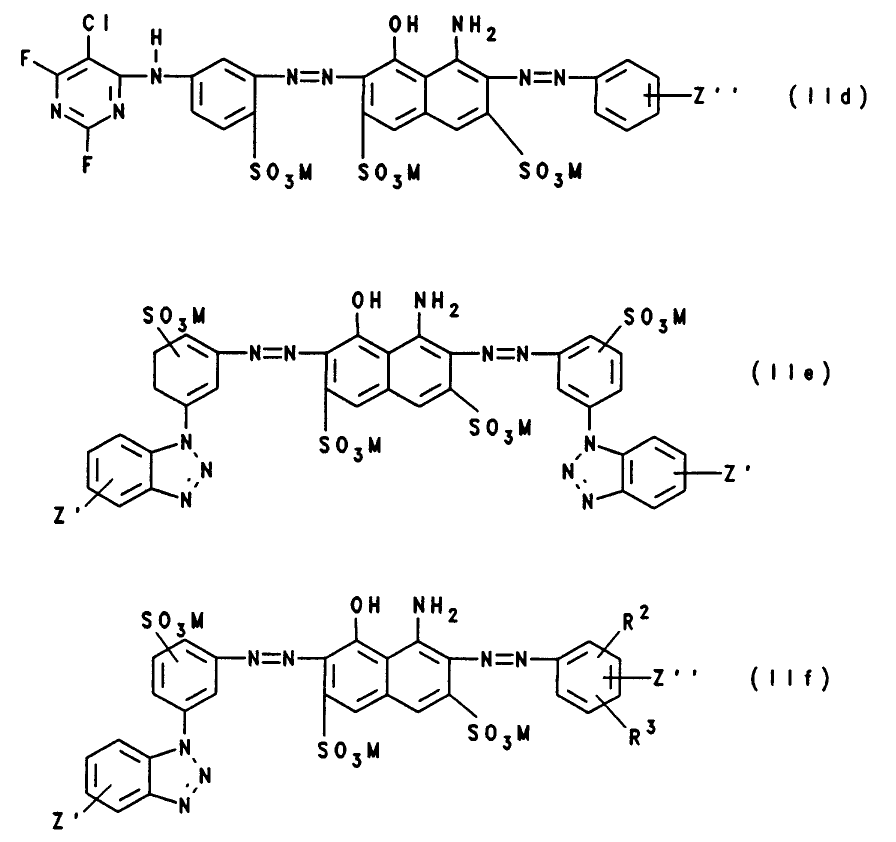 worin die einzelnen Symbole zueinander gleiche oder voneinander verschiedene Bedeutungen besitzen und
Z' eine Vinylsulfonyl-Gruppe, eine β-Sulfatoethylsulfonyl-Gruppe oder eine Ethylsulfonyl-Gruppe ist, die in β-Stellung mit einem Substituenten substituiert ist, der durch Alkali unter Bildung der Vinylsulfonyl-Gruppe eliminierbar ist;
Z'' die gleiche Bedeutung wie Z' hat oder eine Carboxy-, Sulfo- oder Sulfonamid-Gruppe entsprechend der allgemeinen Formel (III) bedeutet 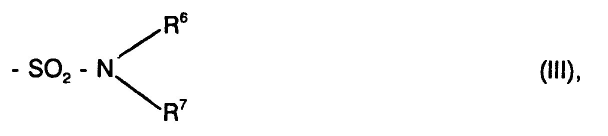
in welcher
R⁶ ein Wasserstoffatom, eine C₁-C₄-Alkylgruppe oder eine durch eine Sulfo-, Sulfato-, Phosphato- oder Carboxygruppe substituierte C₁-C₄-Alkylgruppe, ist und
R⁷ ein Wasserstoffatom oder eine C₁-C₄-Alkylgruppe die durch 1 oder 2 Substituenten aus der Gruppe Sulfato, Sulfo, Carboxy und Phosphato substituiert sein kann, oder eine Arylgruppe, die durch 1 bis 3 Substituenten aus der Gruppe Sulfo und Carboxy substituiert sein kann, oder eine durch eine Arylgruppe substituierte C₁-C₄-Alkylgruppe, die im Arylrest durch 1 bis 3 Substituenten aus der Gruppe Sulfo und Carboxy substituiert sein kann, bedeutet;
R¹ ein Wasserstoffatom, eine C₁-C₄-Alkylgruppe oder eine durch eine Sulfo-, Sulfato-, Phosphato- oder Carboxygruppe substituierte C₁-C₄-Alkylgruppe ist;
R² und R³ unabhängig voneinander jeweils ein Wasserstoffatom, eine Sulfogruppe, eine Carboxygruppe, eine C₁-C₄-Alkylgruppe, eine Alkoxygruppe von 1 bis 4 C-Atomen, oder ein Halogenatom, sind;
R⁴ eine Gruppe der allgemeinen Formel (IV) 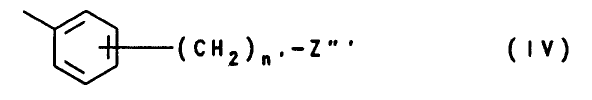 in welcher
Z''' die gleiche Bedeutung wie Z' hat und
n' eine ganze Zahl von Null bis 3 bedeutet,
oder eine Gruppe der allgemeinen Formel (V)
- (CH₂)ₙ - Z' (V)
in welcher
Z' die obengenannte Bedeutung hat und
n für eine ganze Zahl von 1 bis 3 steht, bedeutet;
M ein Wasserstoffatom oder ein Alkalimetallatom, bedeutet;
n₁, n₂, n₃ und n₄ unabhängig voneinander jeweils für eine ganze Zahl von 1 bis 3 stehen;
A eine Sulfo-, Sulfato-, Phosphato- oder Carboxygruppe bedeutet;
B ein Brückenglied aus der Gruppe -O-, -S-, SO₂-, -C(=O)-, -NH-, -NH-C(=O)-oder -C(=O)-NH- bedeutet;
D eine Hydroxy-, Sulfo-, Cyanamid- oder Alkoxygruppe von 1 bis 4 C-Atomen, ein Halogenatom oder eine Gruppe der allgemeinen Formel (VI)
-NR⁶R⁷ (VI),
in welcher R⁶ und R⁷ die obengenannten Bedeutungen haben, oder eine Gruppe der allgemeinen Formel (VII) 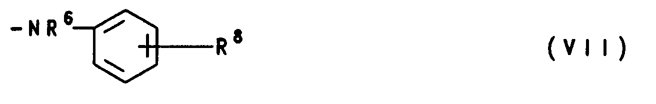 in welcher
R⁶ die obengenannten Bedeutungen hat
R⁸ ein Halogenatom, eine Sulfogruppe oder eine Sulfonamidgruppe entsprechend der vorstehend definierten allgemeinen Formel (III) oder eine Carboxygruppe, eine β-Sulfatoethylsulfonyl-Gruppe, eine Vinylsulfonyl-Gruppe oder eine Ethylsulfonyl-Gruppe, die in β-Stellung mit einem Substituenten substituiert ist, der durch Alkali unter Bildung der Vinylsulfonyl-Gruppe eliminierbar ist, und
X ein Halogenatom ist.

2. Farbstoffzusammensetzung gemäß Anspruch 1 mit Mengenverhältnissen der Farbstoffe der allgemeinen Formeln (I) und (II) zwischen 60:40 und 10:90, vorzugsweise zwischen 40:60 und 15:85, Gewichtsteilen.

3. Farbstoffzusammensetzung nach mindestens einem der Ansprüche 1 oder 2, dadurch gekennzeichnet, daß in den Farbstoffen der allgemeinen Formeln (I) und (II)
Z' eine Vinylsulfonyl- oder eine β-Sulfatoethylsulfonyl-Gruppe;
Z'' eine Vinylsulfonyl-, β-Sulfatoethylsulfonyl-, Sulfo- oder eine Sulfamid-Gruppe entsprechend der allgemeinen Formel (III), in welcher R⁶ für ein Wasserstoffatom und R⁷ für ein Wasserstoffatom, eine Phenyl- oder Naphthylgruppe, vorzugsweise ein Wasserstoffatom, stehen;
R¹ ein Wasserstoffatom oder eine Methylgruppe;
R² ein Wasserstoffatom, eine Methyl- oder Methoxygruppe, ein Chlor- oder Bromatom, vorzugsweise ein Wasserstoffatom;
R³ ein Wasserstoffatom, eine Sulfo- oder eine Carboxy-Gruppe, eine Methyl- oder Methoxygruppe, ein Chlor- oder Bromatom, vorzugsweise ein Wasserstoffatom;
R⁴ eine Gruppe der allgemeinen Formel (IV), in welcher Z''' eine Vinylsulfonyl-, β-Sulfatoethylsulfonyl- oder eine β-Chlorethylsulfonyl-Gruppe ist und n' für die Zahl Null oder 1 steht
oder eine Gruppe der allgemeinen Formel (V), in welcher Z' eine Vinylsulfonyl-, β-Sulfatoethylsulfonyl- oder eine β-Chlorethylsulfonyl-Gruppe ist und n für die Zahl 2 oder 3 steht;
M ein Wasserstoffatom oder ein Alkalimetallatom, vorzugsweise Natrium, Kalium oder Lithium;
n₁ und n₄ jeweils eine gleiche Zahl von 1 bis 3;
n₂ und n₃ jeweils eine gleiche Zahl von 1 bis 3;
A eine Carboxy- oder Sulfogruppe;
B ein Brückenglied aus der Gruppe -NH-C(=O)- oder -C(=O)-NH-;
D eine Methoxygruppe oder eine Gruppe der allgemeinen Formel (VII), in welcher R⁶ für ein Wasserstoffatom steht und R⁸ ein Chloratom oder eine Sulfo-, Vinylsulfonyl- oder β-Sulfatoethylsulfonyl-Gruppe ist; und
X ein Chlor- oder Fluoratom bedeuten.

4. Farbstoffzusammensetzung nach mindestens einem der Ansprüche 1 bis 3, dadurch gekennzeichnet, daß in dem Farbstoff der allgemeinen Formel (I) Z' eine β-Sulfatoethylsulfonyl-Gruppe ist.

5. Farbstoffzusammensetzung nach mindestens einem der Ansprüche 1 bis 4, dadurch gekennzeichnet, daß in den Farbstoffen der allgemeinen Formel (I) R¹ für ein Wasserstoffatom steht.

6. Farbstoffzusammensetzung nach mindestens einem der Ansprüche 1 bis 3, dadurch gekennzeichnet, daß in den Farbstoffen der allgemeinen Formeln (II)
R² und R³ jeweils ein Wasserstoffatom bedeuten;
R⁴ eine Gruppe der allgemeinen Formel (IV), in welcher Z''' eine Vinylsulfonyl- oder eine β-Chlorethylsulfonyl-Gruppe ist und
D eine Methoxygruppe oder eine Gruppe der allgemeinen Formel (VII), in welcher R⁸ jeweils in meta-Stellung ein Chloratom, eine Vinylsulfonyl- oder eine β-Sulfatoethylsulfonyl-Gruppe ist.

7. Farbstoffzusammensetzung nach mindestens einem der Ansprüche 1 bis 3, dadurch gekennzeichnet, daß in den Farbstoffen der allgemeinen Formeln (II) Z', Z'' und Z''' jeweils eine β-Sulfatoethylsulfonyl-Gruppe ist.

8. Farbstoffzusammensetzung nach mindestens einem der Ansprüche 1 bis 3 aus jeweils nur einem Farbstoff der allgemeinen Formeln (I) und (II).

9. Farbstoffzusammensetzung nach einem der Ansprüche 1 oder 2 aus einem Farbstoff der allgemeinen Formel (XIX) und einem Farbstoff der allgemeinen Formel (VIII) 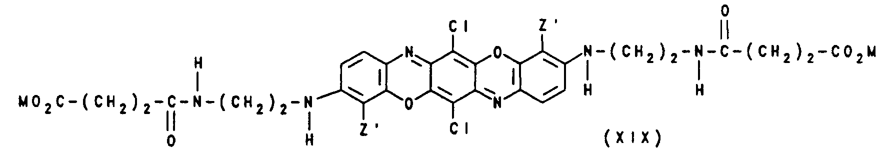 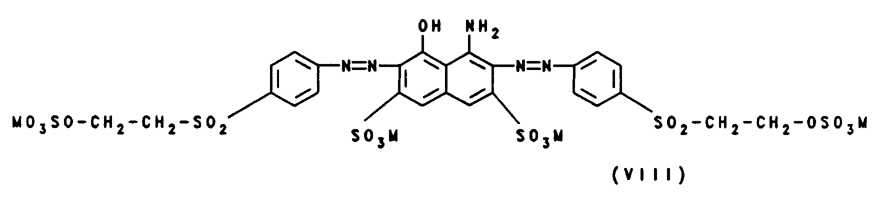 in welcher
M Wasserstoff oder ein Alkalimetallatom, vorzugsweise Lithium, Natrium oder Kalium, und
Z' eine Vinylsulfonyl- oder β-Sulfatoethylsulfonyl-Gruppe bedeuten.

10. Lösung, bevorzugt wäßrige Lösung, einer Farbstoffzusammensetzung nach mindestens einem der Ansprüche 1 bis 9 mit einem Gesamtfarbstoffgehalt der Farbstoffe (I) und (II) von 10 bis 50 Gew.-% und einem pH-Wert zwischen 4 und 7.

11. Pulver oder Granulat einer Farbstoffzusammensetzung nach mindestens einem der Ansprüche 1 bis 9 mit einem Gesamtfarbstoffgehalt der Farbstoffe (I) und (II) von 20 bis 80 Gew.-%, vorzugsweise von 40 bis 60 Gew.-%.

12. Verwendung der Farbstoffzusammensetzung nach mindestens einem der Ansprüche 1 bis 11 zum Färben oder Bedrucken von carbonamidgruppenhaltigen oder bevorzugt hydroxygruppenhaltigen Fasermaterialien.

13. Verwendung nach Anspruch 12 zum Färben von Cellulosefasermaterialien unter alkalischen Färbebedingungen nach dem Ausziehverfahren.

## Patentansprüche (Patentansprüche für folgende(n) Vertragsstaat(en): ES)

1. Verfahren zur Herstellung einer Farbstoffzusammensetzung von wasserlöslichen faserreaktiven Farbstoffen durch Vermischen der einzelnen Farbstoffkomponenten, dadurch gekennzeichnet, daß die Farbstoffzusammensetzung mindestens einen Dioxazinfarbstoff entsprechend der allgemeinen Formel (I) und mindestens einen Disazofarbstoff entsprechend den allgemeinen Formeln (IIa), (IIb), (IIc), (IId), (IIe) und (IIf) im Verhältnis von 90:10 bis 10:90 Gewichtsteilen der Farbstoffe (I) und (II) enthält oder im wesentlichen daraus besteht, 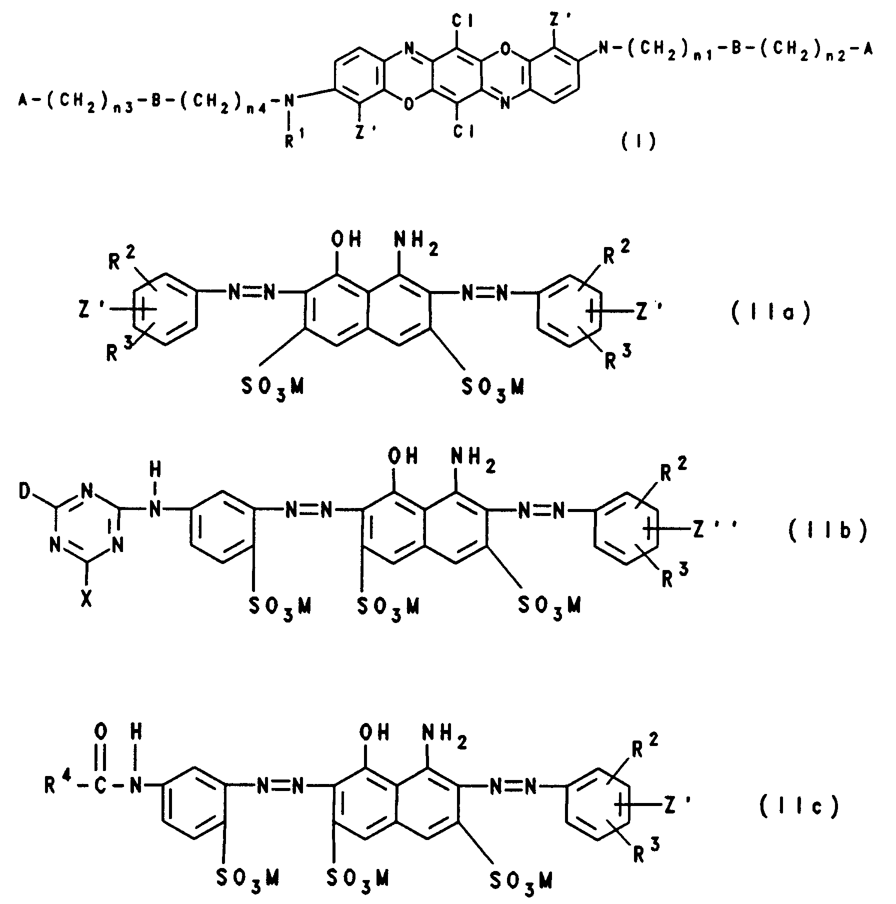 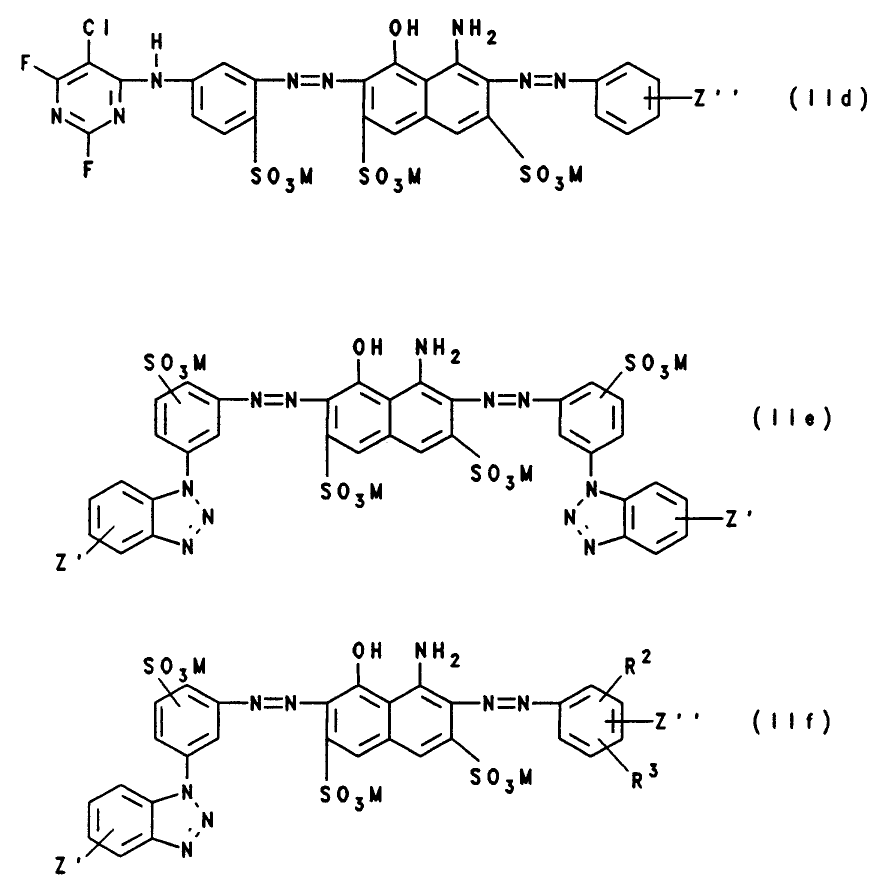 worin die einzelnen Symbole zueinander gleiche oder voneinander verschiedene Bedeutungen besitzen und
Z' eine Vinylsulfonyl-Gruppe, eine β-Sulfatoethylsulfonyl-Gruppe oder eine Ethylsulfonyl-Gruppe ist, die in β-Stellung mit einem Substituenten substituiert ist, der durch Alkali unter Bildung der Vinylsulfonyl-Gruppe eliminierbar ist;
Z'' die gleiche Bedeutung wie Z' hat oder eine Carboxy-, Sulfo- oder Sulfonamid-Gruppe entsprechend der allgemeinen Formel (III) bedeutet 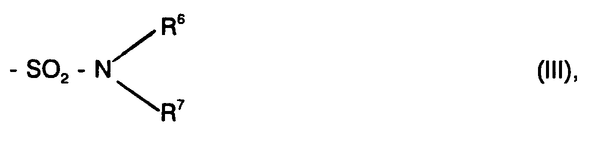
in welcher
R⁶ ein Wasserstoffatom, eine C₁-C₄-Alkylgruppe oder eine durch eine Sulfo-, Sulfato-, Phosphato- oder Carboxygruppe substituierte C₁-C₄-Alkylgruppe, ist und
R⁷ ein Wasserstoffatom oder eine C₁-C₄-Alkylgruppe die durch 1 oder 2 Substituenten aus der Gruppe Sulfato, Sulfo, Carboxy und Phosphato substituiert sein kann, oder eine Arylgruppe, die durch 1 bis 3 Substituenten aus der Gruppe Sulfo und Carboxy substituiert sein kann, oder eine durch eine Arylgruppe substituierte C₁-C₄-Alkylgruppe, die im Arylrest durch 1 bis 3 Substituenten aus der Gruppe Sulfo und Carboxy substituiert sein kann, bedeutet;
R¹ ein Wasserstoffatom, eine C₁-C₄-Alkylgruppe oder eine durch eine Sulfo-, Sulfato-, Phosphato- oder Carboxygruppe substituierte C₁-C₄-Alkylgruppe ist;
R² und R³ unabhängig voneinander jeweils ein Wasserstoffatom, eine Sulfogruppe, eine Carboxygruppe, eine C₁-C₄-Alkylgruppe, eine Alkoxygruppe von 1 bis 4 C-Atomen, oder ein Halogenatom, sind;
R⁴ eine Gruppe der allgemeinen Formel (IV) 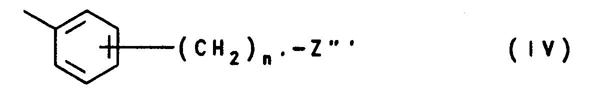 in welcher
Z''' die gleiche Bedeutung wie Z' hat und
n' eine ganze Zahl von Null bis 3 bedeutet,
oder eine Gruppe der allgemeinen Formel (V)
- (CH₂)ₙ - Z' (V)
in welcher
Z' die obengenannte Bedeutung hat und
n für eine ganze Zahl von 1 bis 3 steht, bedeutet;
M ein Wasserstoffatom oder ein Alkalimetallatom, bedeutet;
n₁, n₂, n₃ und n₄ unabhängig voneinander jeweils für eine ganze Zahl von 1 bis 3 stehen;
A eine Sulfo-, Sulfato-, Phosphato- oder Carboxygruppe bedeutet;
B ein Brückenglied aus der Gruppe -O-, -S-, -SO₂-, -C(=O)-, -NH-, -NH-C(=O)- oder -C(=O)-NH- bedeutet;
D eine Hydroxy-, Sulfo-, Cyanamid- oder Alkoxygruppe von 1 bis 4 C-Atomen, ein Halogenatom oder eine Gruppe der allgemeinen Formel (VI)
-NR⁶R⁷ (VI),
in welcher R⁶ und R⁷ die obengenannten Bedeutungen haben, oder eine Gruppe der allgemeinen Formel (VII) 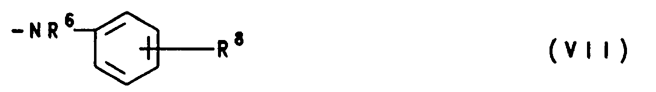 in welcher
R⁶ die obengenannten Bedeutungen hat
R⁸ ein Halogenatom, eine Sulfogruppe oder eine Sulfonamidgruppe entsprechend der vorstehend definierten allgemeinen Formel (III) oder eine Carboxygruppe, eine β-Sulfatoethylsulfonyl-Gruppe, eine Vinylsulfonyl-Gruppe oder eine Ethylsulfonyl-Gruppe, die in β-Stellung mit einem Substituenten substituiert ist, der durch Alkali unter Bildung der Vinylsulfonyl-Gruppe eliminierbar ist, und
X ein Halogenatom ist.

2. Verfahren gemäß Anspruch 1 mit Mengenverhältnissen der Farbstoffe der allgemeinen Formeln (I) und (II) zwischen 60:40 und 10:90, vorzugsweise zwischen 40:60 und 15:85, Gewichtsteilen.

3. Verfahren nach mindestens einem der Ansprüche 1 oder 2, dadurch gekennzeichnet, daß in den Farbstoffen der allgemeinen Formeln (I) und (II)
Z' eine Vinylsulfonyl- oder eine β-Sulfatoethylsulfonyl-Gruppe;
Z'' eine Vinylsulfonyl-, β-Sulfatoethylsulfonyl-, Sulfo- oder eine Sulfamid-Gruppe entsprechend der allgemeinen Formel (III), in welcher R⁶ für ein Wasserstoffatom und R⁷ für ein Wasserstoffatom, eine Phenyl- oder Naphthylgruppe, vorzugsweise ein Wasserstoffatom, stehen;
R¹ ein Wasserstoffatom oder eine Methylgruppe;
R² ein Wasserstoffatom, eine Methyl- oder Methoxygruppe, ein Chlor- oder Bromatom, vorzugsweise ein Wasserstoffatom;
R³ ein Wasserstoffatom, eine Sulfo- oder eine Carboxy-Gruppe, eine Methyl- oder Methoxygruppe, ein Chlor- oder Bromatom, vorzugsweise ein Wasserstoffatom;
R⁴ eine Gruppe der allgemeinen Formel (IV), in welcher Z''' eine Vinylsulfonyl-, β-Sulfatoethylsulfonyl- oder eine β-Chlorethylsulfonyl-Gruppe ist und n' für die Zahl Null oder 1 steht
oder eine Gruppe der allgemeinen Formel (V), in welcher Z' eine Vinylsulfonyl-, β-Sulfatoethylsulfonyl- oder eine β-Chlorethylsulfonyl-Gruppe ist und n für die Zahl 2 oder 3 steht;
M ein Wasserstoffatom oder ein Alkalimetallatom, vorzugsweise Natrium, Kalium oder Lithium;
n₁ und n₄ jeweils eine gleiche Zahl von 1 bis 3;
n₂ und n₃ jeweils eine gleiche Zahl von 1 bis 3;
A eine Carboxy- oder Sulfogruppe;
B ein Brückenglied aus der Gruppe -NH-C(=O)- oder -C(=O)-NH-;
D eine Methoxygruppe oder eine Gruppe der allgemeinen Formel (VII), in welcher R⁶ für ein Wasserstoffatom steht und R⁸ ein Chloratom oder eine Sulfo-, Vinylsulfonyl- oder β-Sulfatoethylsulfonyl-Gruppe ist; und
X ein Chlor- oder Fluoratom bedeuten.

4. Verfahren nach mindestens einem der Ansprüche 1 bis 3, dadurch gekennzeichnet, daß in dem Farbstoff der allgemeinen Formel (I) Z' eine β-Sulfatoethylsulfonyl-Gruppe ist.

5. Verfahren nach mindestens einem der Ansprüche 1 bis 4, dadurch gekennzeichnet, daß in den Farbstoffen der allgemeinen Formel (I) R¹ für ein Wasserstoffatom steht.

6. Verfahren nach mindestens einem der Ansprüche 1 bis 3, dadurch gekennzeichnet, daß in den Farbstoffen der allgemeinen Formeln (II)
R² und R³ jeweils ein Wasserstoffatom bedeuten;
R⁴ eine Gruppe der allgemeinen Formel (IV), in welcher Z''' eine Vinylsulfonyl- oder eine β-Chlorethylsulfonyl-Gruppe ist und
D eine Methoxygruppe oder eine Gruppe der allgemeinen Formel (VII), in welcher R⁸ jeweils in meta-Stellung ein Chloratom, eine Vinylsulfonyl- oder eine β-Sulfatoethylsulfonyl-Gruppe ist.

7. Verfahren nach mindestens einem der Ansprüche 1 bis 3, dadurch gekennzeichnet, daß in den Farbstoffen der allgemeinen Formeln (II) Z', Z'' und Z''' jeweils eine β-Sulfatoethylsulfonyl-Gruppe ist.

8. Verfahren nach mindestens einem der Ansprüche 1 bis 3, dadurch gekennzeichnet, daß die Farbstoffzusammensetzung aus jeweils nur einem Farbstoff der allgemeinen Formeln (I) und (II) besteht.

9. Verfahren nach einem der Ansprüche 1 oder 2, dadurch gekennzeichnet, daß die Farbstoffzusammensetzung aus einem Farbstoff der allgemeinen Formel (XIX) und einem Farbstoff der allgemeinen Formel (VIII) besteht 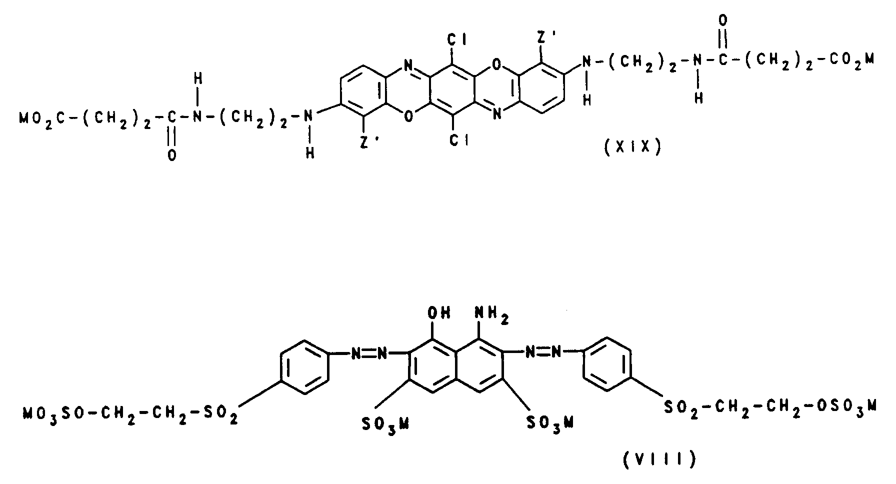 in welcher
M Wasserstoff oder ein Alkalimetallatom, vorzugsweise Lithium, Natrium oder Kalium, und
Z' eine Vinylsulfonyl- oder β-Sulfatoethylsulfonyl-Gruppe bedeuten.

10. Verfahren zur Herstellung einer wäßrigen Lösung einer Farbstoffzusammensetzung nach mindestens einem der Ansprüche 1 bis 9 durch Lösen von 10 bis 50 Gew.-%, bezogen auf das Gewicht der Farbstoffzusammensetzung, der Farbstoffe (I) und (II) in Wasser unter Zusatz eines Puffers, der die Lösung auf einen pH-Wert zwischen 4 und 7 einstellt und hält.

11. Verfahren nach mindestens einem der Ansprüche 1 bis 9, dadurch gekennzeichnet, daß die Farbstoffzusammensetzung als Pulver oder Granulat vorliegt und einen Gesamtfarbstoffgehalt der Farbstoffe (I) und (II) von 20 bis 80 Gew.-%, vorzugsweise von 40 bis 60 Gew.-%, aufweist.

12. Verwendung der Farbstoffzusammensetzung nach mindestens einem der Ansprüche 1 bis 11 zum Färben oder Bedrucken von carbonamidgruppenhaltigen oder bevorzugt hydroxygruppenhaltigen Fasermaterialien.

13. Verwendung nach Anspruch 12 zum Färben von Cellulosefasermaterialien unter alkalischen Färbebedingungen nach dem Ausziehverfahren.
